# EUROPÄISCHE PATENTANMELDUNG

(11) **EP 1 091 163 A1**
(43) Veröffentlichungstag der Anmeldung: **11.04.2001**
(21) Anmeldenummer: 99119792.2
(22) Anmeldetag: 06.10.1999
(51) Int. Cl.: F16N 39/06, B01D 29/05

(54) **Einrichtung zum Aufnehmen und Festhalten von Verunreinigungen in Flüssigkeiten in einem umlaufende Maschinenelemente aufnehmenden Gehäuse**

(71) Anmelder: Ford Global Technologies, Inc., A subsidiary of Ford Motor Company, Dearborn, Michigan 48126 (US)
(72) Erfinder: Mohr, Christian, 54290 Trier (DE); Odermatt, Manfred, 53773 Hennef (DE)
(74) Vertreter: Drömer, Hans-Carsten, Dipl.-Ing.

(57) **Zusammenfassung**

Bei einer Einrichtung zum Aufnehmen und Festhalten von Verunreinigungen in Flüssigkeiten in einem umlaufende Maschinenelemente aufnehmenden Gehäuse, mit einem in einem Bereich des Gehäuses angeordneten, von der Flüssigkeit beaufschlagbaren porösen Material, ist das poröse Material (5 bzw. 5') auf einer grossen, einer unmittelbaren Beaufschlagung durch die Flüssigkeit ausgesetzten Gehäuseoberfläche (4) des Gehäuses (1) angeordnet und besteht aus einer engmaschigen oder engzelligen Bodenschicht (6 bzw. 6') und einer teppichartigen Oberschicht (7 bzw. 7').

## Beschreibung

Die Erfindung bezieht sich auf eine Einrichtung zum Aufnehmen und Festhalten von Verunreinigungen in Flüssigkeiten in einem umlaufende Maschinenelemente aufnehmenden Gehäuse, der im Oberbegriff des Patentanspruches 1 erläuterten Art.

Aus der DE 40 03 900 A1 ist ein Zahnrädergetriebe mit einem oberhalb des Ölspiegels angeordneten Ölauffangbehälter bekannt, der eine obere Eintrittsöffnung und einen Ablauf aufweist, zwischen denen ein Filter zum Aufnehmen und Festhalten von Verunreinigungen in einer durch umlaufende Maschinenelemente zirkulierenden Flüssigkeit angeordnet ist.

Diese bekannte Einrichtung weist den Nachteil auf, dass die durch die umlaufenden Zahnräder in Umlauf gebrachte Flüssigkeit, in diesem Fall das Schmieröl, nur zu einem geringen Teil diesen Ölauffangbehälter passiert und insbesondere dies nur im dynamischen Umlaufbetrieb.

Während der normalerweise grösseren Zeitspannen eines Ruhezustandes setzen sich Verunreinigungen der Flüssigkeit am Boden des Gehäuses ab und werden beim nächsten Umlaufbetrieb wieder aufgewirbelt und mitgenommen, wodurch die Wahrscheinlichkeit und Gefahr, dass solche Verunreinigungen in Lager gelangen und dort zerstörend wirksam werden, wesentlich erhöht wird.

Aus der JP 59 062 797 A1 ist eine Einrichtung zum Aufnehmen und Festhalten von Verunreinigungen in Flüssigkeiten in einem umlaufende Maschinenelemente aufnehmenden Gehäuse bekannt, bei dem in einem kleinen Bereich des Bodens des Gehäuses unter Abschirmung durch ein Maschengewebe Verunreinigungen in ein unterhalb des Maschengewebes angeordnetes poröses Material absinken können, wo sie festgehalten und einem weiteren Umlauf entzogen werden.

Die bekannte Einrichtung weist den gleichen Nachteil auf wie die zuvor erwähnte Einrichtung, nämlich dass die zum Aufnehmen und Festhalten von Verunreinigungen vorgesehene Fläche im Gehäuse viel zu gering bemessen ist, so dass ein Grossteil der sich im Ruhezustand absetzenden Verunreinigungen wieder in Umlauf gelangen.

Die Aufgabe der Erfindung ist es, eine Einrichtung zum Aufnehmen und Festhalten von Verunreinigungen in Flüssigkeiten in einem umlaufende Maschinenelemente aufnehmenden Gehäuse derart zu verbessern, dass das die Verunreinigungen aufnehmende und festhaltende poröse Material auf einer möglichst grossen Bodenfläche des Gehäuses in einfacher Weise und mit einfachen Mitteln angeordnet werden kann.

Gemäss der Erfindung wird diese Aufgabe gelöst, indem eine Einrichtung zum Aufnehmen und Festhalten von Verunreinigungen in Flüssigkeiten in einem umlaufende Maschinenelemente aufnehmenden Gehäuse, der im Oberbegriff des Patentanspruches 1 erläuterten Art, die im Kennzeichenteil des Patentanspruches 1 aufgezeigten Merkmale aufweist.

Dadurch, dass das poröse Material unmittelbar auf einer der Beaufschlagung durch die Flüssigkeit ausgesetzten Oberfläche des Gehäuses angeordnet ist, kann während der oft grösseren Zeitspanne eines Ruhezustandes eine viel grössere Fläche zum Aufnehmen und Festhalten von Verunreinigungen der Flüssigkeit vorgesehen werden, wobei bei einem nachfolgenden Umlaufbetrieb diese Verunreinigungen nicht wieder in Umlauf gebracht werden.

In den weiteren Patentansprüchen sind weitere zweckmässige Anordnungen des porösen Materials im Bezug zur Oberfläche des Gehäuses aufgezeigt.

Die Erfindung wird anhand zweier in den beiliegenden Zeichnungen gezeigten Ausführungsbeispiele näher erläutert. Es zeigt:
- Fig. 1: einen schematischen Vertikalschnitt durch ein Wechselgetriebe eines Kraftfahrzeuges mit der erfindungsgemässen Einrichtung zum Aufnehmen und Festhalten von Verunreinigungen einer Flüssigkeit;
- Fig. 2: eine Schnittansicht entlang der Linie II-II in Fig. 1;
- Fig. 3: eine schematische Ansicht der Bodenfläche des Wechselgetriebes in Richtung des Pfeiles III in Fig. 1;
- Fig. 4, 5 und 6: zeigen entsprechende Schnitte bzw. Ansichten einer weiteren Ausführungsform der Erfindung, die in Hinblick auf eine Beaufschlagung durch die Flüssigkeit bei gleichzeitiger Sicherstellung der erwünschten Wärmeabfuhr aus der Flüssigkeit optimiert ist.

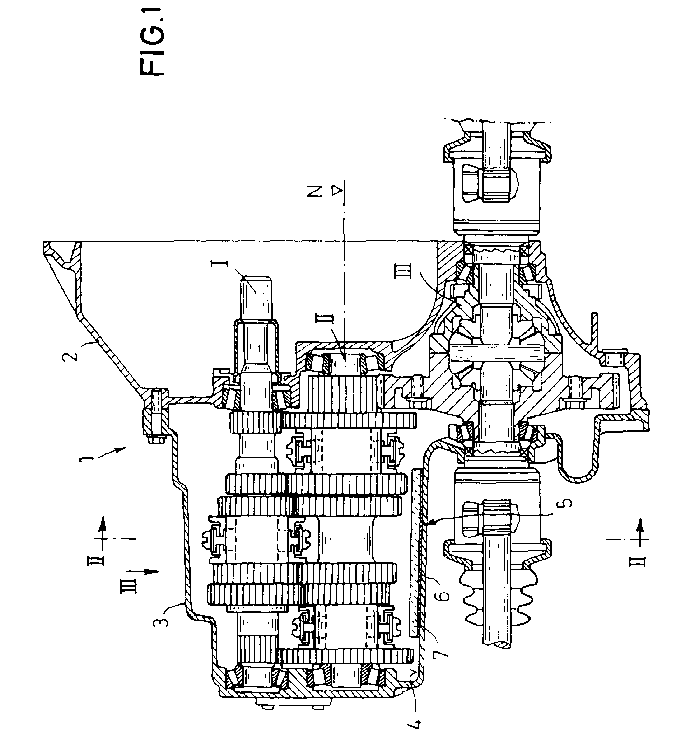

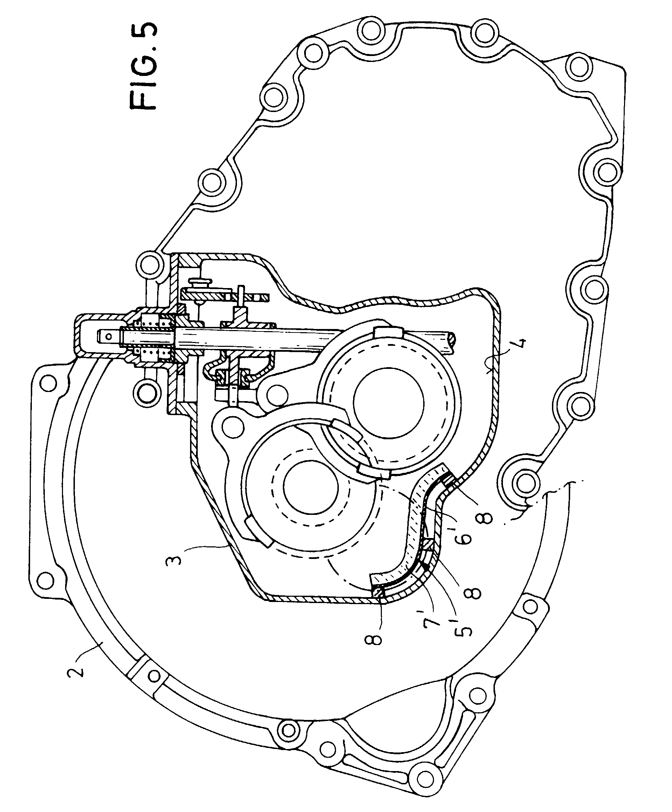

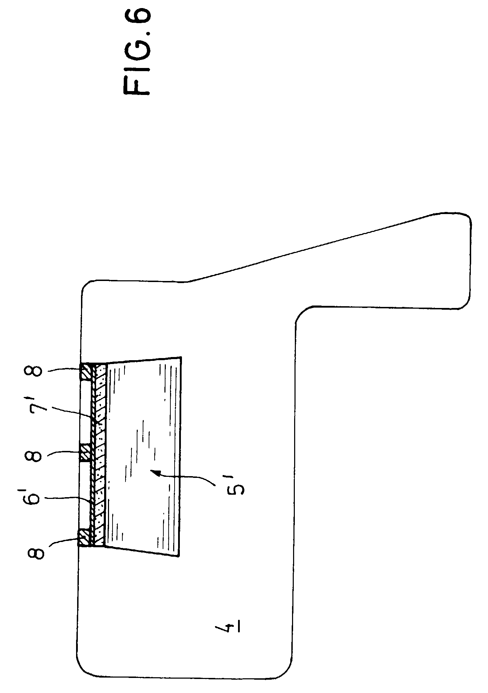

In den Figuren 1 bis 6 sind übereinstimmde Bauteile mit den gleichen Bezugszeichen versehen.

Ein Gehäuse 1 besteht im vorliegenden Fall aus einem Kupplungsgehäuse 2 und einem Getriebegehäuse 3, die in an sich bekannter Weise Getriebewellen I, II und III in entsprechenden Wälzlagern gelagert aufnehmen.

Der Hohlraum des Gehäuses 1 ist in bekannter Weise mit einem Schmiermittel bis zu einem Normalstand gefüllt, der durch eine Strich-Punkt-Linie N angedeutet ist.

Auf dem im wesentlichen horizontalen Bodenbereich 4 des Getriebegehäuses 3 ist ein poröses Material 5 angeordnet, das aus einer engmaschigen oder engzelligen Bodenschicht 6 und einer teppichartigen Oberschicht 7 besteht.

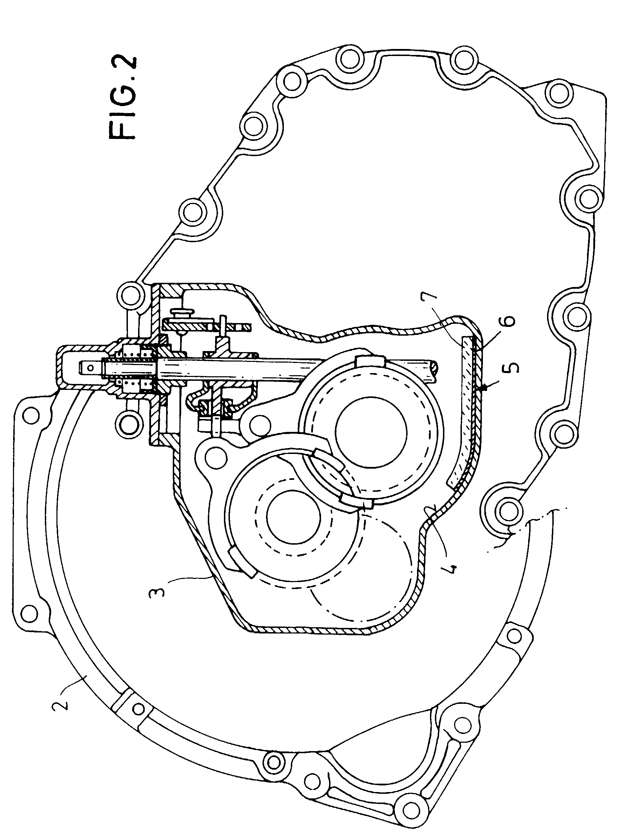

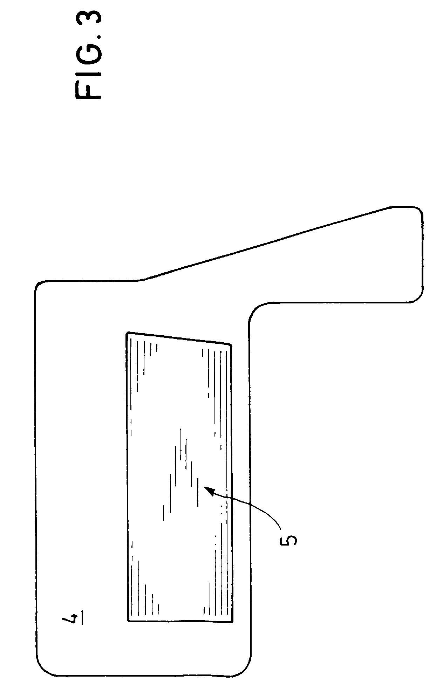

Wie aus einer Zusammenschau der Figuren 2 und 3 ersichtlich wird, erstreckt sich hierbei das poröse Material 5 über einen erheblichen Bereich der horizontalen Bodenfläche 4 des Getriebegehäuses 3, wodurch insbesondere für den zumeist über eine grössere Zeitspanne wirksamen Absetzprozess während eines Ruhezustandes eine sehr grosse Aufnahmefläche zum Aufnehmen und Festhalten der sich absetzenden Verunreinigungen zur Verfügung gestellt wird.

Die Anordnung des porösen Materials 5 kann mit den verschiedensten technischen Verfahren erfolgen, insbesondere sind hierbei die Möglichkeiten gegeben, das Material durch einen entsprechenden Kleber zu verankern, weiterhin besteht die Möglichkeit, das Material durch entsprechende Klemm- oder Haltezungen oder sonstige Befestigungsvorrichtungen in seiner entsprechenden Lage im Getriebegehäuse 3 festzulegen.

Die hier in den Figuren 1 bis 3 gezeigte Ausführungsform ist von der Effektivität des Aufnehmens und Festhaltens von Verunreinigungen zwar hervorragend, sie weist jedoch einen Nachteil auf, der darin liegt, dass heute zumeist im Grossserieneinsatz angewendete Wechselgetriebe insbesondere bei Kraftfahrzeugen im Umlaufbetrieb einen erheblichen Wärmeabfuhrbedarf haben, der unter Umständen durch das unmittelbar auf die Bodenfläche 4 aufgebrachte poröse Material 5 beeinträchtigt werden kann.

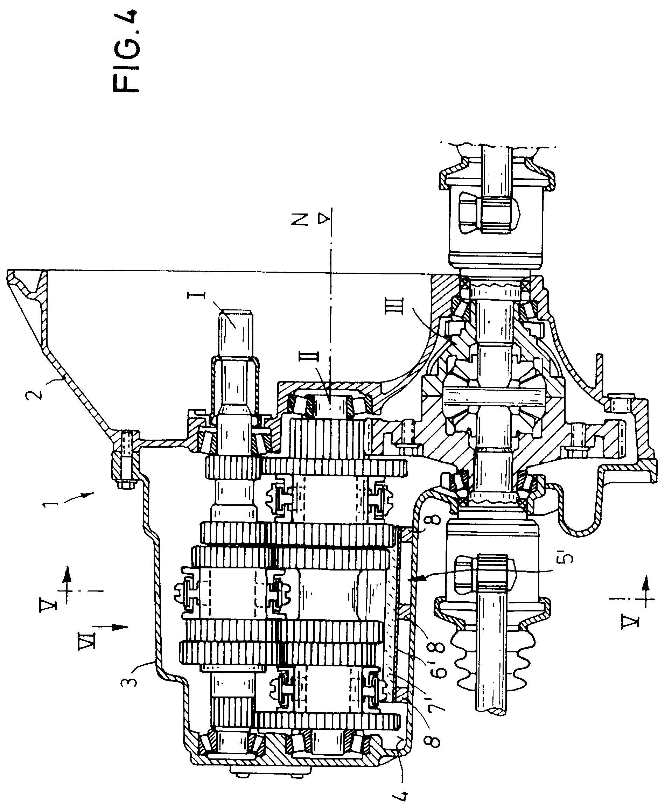

Um diesen Nachteil zu vermeiden, wird auf die Ausführungsform gemäss der Figuren 4, 5 und 6 verwiesen, in denen wieder ein poröses Material 5', bestehend aus einer engmaschigen oder engzelligen Bodenschicht 6' und einer teppichartigen Oberschicht 7' an der im wesentlichen horizontalen Bodenfläche 4 des Getriebegehäuses 3 angeordnet ist, die Bodenschicht 6' ist hierbei mit an entsprechenden Punkte angeordneten Abstandshaltern 8 versehen, mit der das poröse Material 5' in einen derartigen Abstand zur Gehäusewand 4 gehalten werden kann, dass eine Hinterströmung stattfinden kann, wodurch die gegebene Kühlkapazität des Getriebegehäuses aufrechterhalten bleibt.

Die Art der Befestigung des porösen Materials 5' kann wieder durch punktweises Verkleben an den entsprechenden Abstandshaltern 8 erfolgen, andererseits können diese Abstandshalter auch mit entsprechenden Klemm- oder Halteeinrichtungen im Getriebegehäuse zusammenwirken. Dem Fachmann sind hierbei in der Art der Befestigung keinerlei Grenzen gesetzt, sofern nur sichergestellt wird, dass das poröse Material während des Umlaufgetriebes der Flüssigkeit stabil an seinem Ort verbleibt.

Das "poröse Material" 5 bzw. 5' kann im wesentlichen aus sämtlichen Materialien bestehen, die dem Fachmann geläufig sind, um Verunreinigungen aus Flüssigkeiten aufzunehmen und festzuhalten, insbesondere können dies die üblichen synthetischen Fasermaterialien sein, die den entsprechenden Beanspruchungen durch heisses Schmiermittel und dergleichen gerecht werden können. Wesentlich gemäss der vorliegenden Erfindung ist jedoch, dass das "poröse Material" 5 bzw. 5' aus einer unmittelbar der Beaufschlagung durch die Flüssigkeit ausgesetzten teppichartigen Oberschicht 7 bzw. 7' und einer diese tragenden, engmaschigen oder engzelligen Bodenschicht 6 bzw. 6' besteht. Damit wird sichergestellt, dass ohne die bei herkömmlichen Filterpackungen erforderliche äussere Umhüllung das durch ein Fasergewirr gebildete Innere des porösen Materials 5 bzw. 5' unmittelbar zugänglich ist und ggf. sogar gemäss der Ausführungsform in den Figuren 4 bis 6 durchströmbar ist.

Die Erfindung zeigt somit eine Einrichtung zum Aufnehmen und Festhalten von Verunreinigungen in Flüssigkeiten in einem umlaufende Maschinenelemente aufnehmenden Gehäuse auf, die bei geringem Materialaufwand und äusserst geringem Montageaufwand in fast alle gängige Gehäuse dieser Art nachträglich einbringbar ist, um dort die Qualität der umlaufenden Flüssigkeit dadurch zu erhöhen, dass insbesondere während der langen Zeitspannen von Ruhezuständen feinste Verunreinigungen auch nicht metallischer Art lediglich durch deren Absinkverhalten aufgenommen und festgehalten werden.

## Patentansprüche

1. Einrichtung zum Aufnehmen und Festhalten von Verunreinigungen in Flüssigkeiten in einem umlaufende Maschinenelemente aufnehmenden Gehäuse, mit einem in einem Bereich des Gehäuses (1) angeordneten, von der Flüssigkeit beaufschlagbaren, porösen Material (5),
**dadurch gekennzeichnet**, dass
- das poröse Material (5 bzw. 5') auf einer grossen, einer unmittelbaren Beaufschlagung durch die Flüssigkeit ausgesetzten Bodenfläche (4) des Gehäuses (3) angeordnet ist.

2. Einrichtung zum Aufnehmen und Festhalten von Verunreinigungen in Flüssigkeiten nach Anspruch 1,
**dadurch gekennzeichnet**, dass
- das poröse Material (5 bzw. 5') aus einer engmaschigen oder engzelligen Bodenschicht (6 bzw. 6') und einer teppichartigen Oberschicht (7 bzw. 7') besteht, wobei letztere in den verschiedensten bekannten Weisen durch Nadeln, Tuften oder Schlingen herstellbar ist.

3. Einrichtung zum Aufnehmen und Festhalten von Verunreinigungen in Flüssigkeiten nach den Ansprüchen 1 und 2,
**dadurch gekennzeichnet**, dass
- das poröse Material (5 bzw. 5') mit seiner Bodenschicht (6 bzw. 6') an der Bodenfläche (4) des Gehäuses (3) durch Kleben befestigt ist.

4. Einrichtung zum Aufnehmen und Festhalten von Verunreinigungen in Flüssigkeiten nach den Ansprüchen 1 und 2,
**dadurch gekennzeichnet**, dass
- das poröse Material (5 bzw. 5') durch Klemm- oder Schraubverbindungen an der Bodenwandung (4) des Gehäuses (3) befestigt ist.

5. Einrichtung zum Aufnehmen und Festhalten von Verunreinigungen in Flüssigkeiten nach den Ansprüchen 1 und 2,
**dadurch gekennzeichnet**, dass
- das poröse Material (5') zur Aufrechterhaltung der Wärmeabgabekapazität des Gehäuses (3) mit Abstandshaltern (8) versehen ist, über die es im Abstand zur Bodenwandung (4) des Gehäuses (3) durch- und hinterströmbar befestigbar ist.

6. Einrichtung zum Aufnehmen und Festhalten von Verunreinigungen in Flüssigkeiten nach den Ansprüchen 1 bis 5,
**dadurch gekennzeichnet,** dass
- das poröse Material (5') in dem sich an die unmittelbar ebene Bodenfläche (4) anschliessenden Bereiche des Gehäuses (3) in einem Bereich angeordnet ist, der im Umlaufbetrieb der Flüssigkeit einer direkten Beaufschlagung ausgesetzt ist.
